# EUROPÄISCHE PATENTSCHRIFT

(11) **EP 1 119 440 B1**
(45) Veröffentlichungstag und Bekanntmachung des Hinweises auf die Patenterteilung: **06.07.2005**
(21) Anmeldenummer: 99970045.3
(22) Anmeldetag: 23.09.1999
(51) Int. Cl.: B23Q 3/157, B23Q 7/14, B24B 27/00, B24B 41/00, B24B 41/06

(54) **BEARBEITUNGSSYSTEM ZUM BEARBEITEN VON WERKSTÜCKEN, INSBESONDERE ZUM SCHLEIFEN VON WERKSTÜCKEN**
MACHINING SYSTEM FOR MACHINING WORKPIECES, ESPECIALLY FOR POLISHING WORKPIECES
SYSTEME POUR L'USINAGE DE PIECES, NOTAMMENT POUR LE POLISSAGE DE PIECES

(30) Priorität: 08.10.1998 DE 19846278
(43) Veröffentlichungstag der Anmeldung: 01.08.2001
(73) Patentinhaber: ROBERT BOSCH GMBH, 70442 Stuttgart (DE)
(72) Erfinder: HOFER, Joachim, D-72336 Balingen (DE); RUDOLF, Uwe, D-74206 Bad Wimpfen (DE)
(86) Internationale Anmeldenummer: PCT/DE1999/003048
(87) Internationale Veröffentlichungsnummer: WO 2000/020165

(56) Entgegenhaltungen:
- DE-A- 4 027 894
- US-A- 4 068 412
- US-A- 4 286 413

## Beschreibung

### Stand der Technik

Die Erfindung geht aus von einem Bearbeitungssystem zum Bearbeiten von Werkstücken, insbesondere zum Schleifen von Werkstücken, nach der Gattung des Hauptanspruchs. Ein derartiges Bearbeitungssystem ist aus der US-A-4 286 413 bekannt. In der nicht vorveröffentlichten DE 197 16 243 ist bereits ein Bearbeitungssystem beschrieben, das aus mindestens zwei Bearbeitungsstationen besteht, auf denen Schlitten für Werkzeuge zur Bearbeitung der Werkstücke verfahrbar angeordnet sind. Die Werkstücke werden in als Antriebsspindeln ausgebildete Werkstückaufnahmen gespannt. Die Werkstücke werden dann zusammen mit den Antriebsspindeln von Bearbeitungsstation zu Bearbeitungsstation getaktet. Da die Werkstücke in den Antriebsspindeln eingespannt bleiben, ergibt sich kein Koaxialfehler zwischen Werkstück- und Spindelachse.

Da die Motoren für die Antriebsspindeln ortsfest an den Bearbeitungsstationen verbleiben, müssen die Antriebsspindeln jedoch vor einer Bearbeitung mit einem Motor verbunden und danach wieder von diesem getrennt werden. Hierzu muß die mechanische Ankupplung der Antriebsspindeln an die Motoren erfolgen. Außerdem müssen diverse Kühlleitungen, Druckluftanschlüsse und eventuell elektrische Leitungen an jeder Antriebsspindel und an jeder Bearbeitungsstation angeschlossen werden. Dies ist insgesamt recht aufwendig.

Da alle Antriebsspindeln gleich ausgebildet sind, können sie nicht an die individuellen Bearbeitungen angepaßt werden. Für eine erste grobe Schleifbearbeitung würde beispielsweise eine Antriebsspindel mit einfachen Gleit- oder Wälzlagern ausreichen. Für eine Endbearbeitung hingegen, wo Toleranzen im µ-Bereich erforderlich sind, ist eine hydrostatisch gelagerte Antriebsspindel erforderlich. Hydrostatisch gelagerte Antriebsspindeln jedoch sind zu aufwendig zum Weitertakten, da Druckmittel vor dem Bearbeiten in die Lager der Antriebsspindeln eingeleitet und nach dem Bearbeiten wieder abgeführt werden muß. Deshalb sind Antriebsspindeln mit Gleit- oder Wälzlagern erforderlich. Dies führt jedoch zu einer geringeren Wiederholgenauigkeit.

Es sind daneben noch Bearbeitungssysteme, beispielsweise Rundschalttische bekannt, bei denen die Werkstücke in den Antriebsspindeln verbleiben, wobei die Antriebsspindeln ortsfest mit den Antriebsmotoren verbunden sind. Beim Weitertakten müssen die Antriebsspindeln und die Antriebsmotoren bewegt und dann positioniert werden. Da jedoch eine sehr große Masse positioniert werden muß, ist die Wiederholgenauigkeit nicht so exakt, daß sich Toleranzen im µ-Bereich oder darunter erzielen lassen.

### Vorteile der Erfindung

Das erfindungsgemäße Bearbeitungssystem zum Bearbeiten von Werkstücken, insbesondere zum Schleifen von Werkstücken, mit den kennzeichnenden Merkmalen des Hauptanspruchs hat demgegenüber den Vorteil, daß ein Werkstückträger vorgesehen ist, der im Aufbau wesentlich einfacher als eine Antriebsspindel ist. Der Werkstückträger hat einen Abschnitt zum Eingriff mit den Arbeitsspindeln mit mindestens einer hochgenau gefertigten mechanischen Spannfläche, wodurch eine sehr exakte Wiederholgenauigkeit beim Einspannen erzielbar ist. Vorteilhafterweise sind die Form- und Lagetoleranzen der Spannflächen des Werkstückträgers und der Antriebsspindeln geringer als die Form- und Lagetoleranzen der Spannstellen der Werkstücke. Besonders einfach ist der Aufbau des Werkstückträgers, wenn dieser Abschnitt im wesentlichen dem Abschnitt von an und für sich bekannten Vorrichtungen zum Spannen von Werkzeugen entspricht. Ein weiterer Vorteil ist es, wenn die Antriebsspindeln zumindest teilweise den Bearbeitungsstationen ortsfest zugeordnet sind. Dadurch kann für jeden Bearbeitungsvorgang eine diesem Bearbeitungsvorgang angepaßte Antriebsspindel verwendet werden.

Die einzelnen Bearbeitungsstationen können in einer weiteren Weiterbildung der Erfindung wahlweise zu einem Bearbeitungssystem kombiniert werden. Hierbei ist es vorteilhaft, die Werkstückträger über ein Transfersystem zu den Antriebsspindeln der Bearbeitungsstationen zu transportieren. Für manche Anwendungen ist es von Vorteil, Werkstückträger nicht von einer Bearbeitungsstation zur nächsten weiterzutakten, sondern sie wahlweise zu den Bearbeitungsstationen zu transportieren. Hierfür ist es von Vorteil, die Bearbeitungsstationen linear anzuordnen. Insbesondere eine Linearachse mit einem Doppelgreifer ist dabei ein besonders geeignetes Transfersystem. Wird noch mindestens eine Bearbeitungsstation mit zwei indexierbaren Antriebsspindeln vorgesehen, so lassen sich zwei Flächen von höchster Präzision und genauster Position zueinander herstellen. Mit diesem Bearbeitungssystem hergestellte Werkstücke genügen höchsten Ansprüchen.

Weitere Vorteile und vorteilhafte Weiterbildungen des erfindungsgemäßen Bearbeitungssystems ergeben sich aus den Unteransprüchen und der Beschreibung.

### Zeichnung

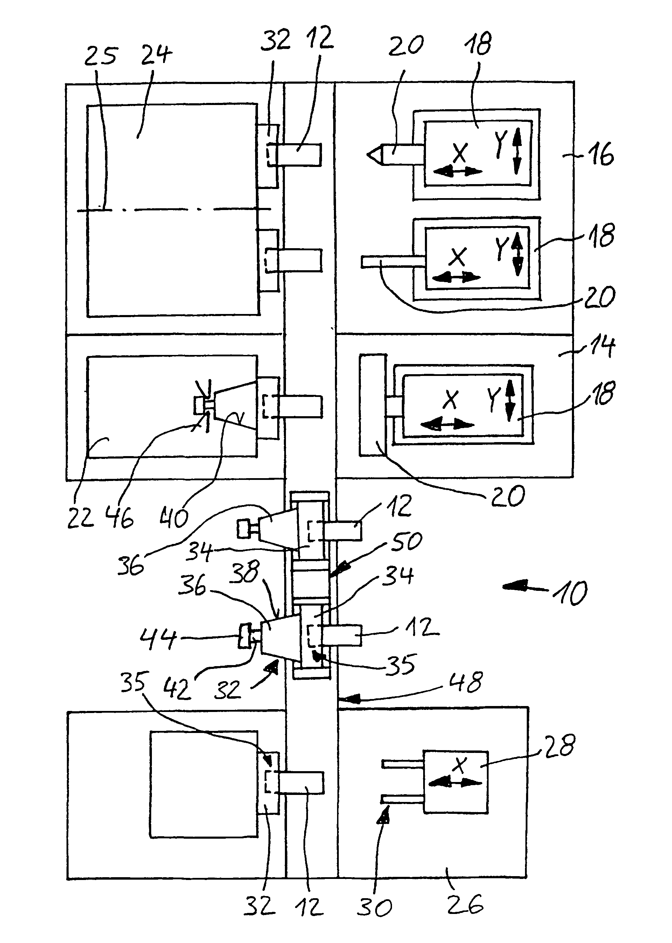

Ein Ausführungsbeispiel der Erfindung ist in der Zeichnung dargestellt und in der nachfolgenden Beschreibung näher erläutert. In der einzigen Figur ist eine schematische Draufsicht auf ein Bearbeitungssystem zum Bearbeiten von Werkstücken gezeigt.

### Beschreibung des Ausführungsbeispiels

In der Figur ist ein modulares Bearbeitungssystem 10 zum Bearbeiten von Werkstücken 12, insbesondere zum Schleifen von Werkstücken 12, dargestellt. Das modulare Bearbeitungssystem 10 soll beispielsweise anhand einer Schleifbearbeitung, insbesondere von Düsenkörpern für Einspritzdüsen und ähnlichem, erläutert werden. Alternativ können ebenso weitere Bearbeitungsvorgänge vorgesehen sein, die auch beliebig miteinander kombinierbar sind, so daß beispielsweise die Bearbeitung Hartdrehen und Schleifen kombiniert werden kann oder auch zunächst eine Dreh- oder Fräsbearbeitung vorgesehen sein kann, die mit einer Endbearbeitung oder Feinstbearbeitung von höchster Präzision wie Schleifen, Hohnen, Läppen, Glätten, oder dergleichen, kombinierbar sein können. Auch dem Aspekt des Entgratens kommt eine große Bedeutung zu, da Kanten, die Grate aufweisen, im Betrieb zu Störungen führen können.

Das Bearbeitungssystem 10 weist mindestens zwei Bearbeitungsstationen 14, 16 auf, auf denen in an und für sich bekannter Weise wenigstens teilweise jeweils mindestens ein Schlitten 18 für Werkzeuge 20 zur Bearbeitung der Werkstücke 12 verfahrbar angeordnet ist. Diese Werkzeuge 20 können für Fräs-, Dreh-, Schleif-, Glatt-, Hohn-, Läpp-, Entgrat- oder sonstige Bearbeitungen vorgesehen sein. Natürlich ist es auch denkbar, daß mehr als die dargestellten Bearbeitungsstationen 14, 16 anordenbar sind. In Abhängigkeit von den erforderlichen Bearbeitungen können beliebig viele Bearbeitungsstationen 14, 16, 26 ergänzt werden. Die Schlitten 18 sind in einer X-Achse längs und in einer Y-Achse quer zu einem Werkstück 12 verfahrbar. An der Bearbeitungsstation 14 ist ein Schlitten 18 mit einem Werkzeug 20 angeordnet. Gegenüber von dem Schlitten 18 ist eine Antriebsspindel 22 für die Werkstücke 12 vorgesehen. Die Antriebsspindel 22 kann je nach erforderlicher Bearbeitungsgenauigkeit beispielsweise gleit- oder wälzgelagert aber auch hydrostatisch gelagert sein. Es sind auch aerostatische Antriebsspindeln 22, 24 denkbar. Auf der an und für sich bekannten Bearbeitungsstation 16 sind nebeneinander zwei Schlitten 18 angeordnet. Gegenüber von diesen beiden Schlitten 18 sind zwei miteinander verbundene und um eine Mittelachse 25 drehbar gelagerte, in ihrer jeweiligen Lage indexierbare Antriebsspindeln 24 angeordnet. Solche Bearbeitungsstationen 16 werden beispielsweise von der schwedischen Firma UVA vertrieben. Mit dieser Bearbeitungsstation 16 sind an den Werkstücken 12 zwei oder mehr Geometrien herstellbar, deren Form sowie Lage zueinander von höchster Güte sind. Die Antriebsspindeln 22, 24 sind zumindest teilweise ortsfest den Bearbeitungsstationen 14, 16 zugeordnet. Dadurch ist es auch in vorteilhafter Weise möglich, daß die Arbeitsspindeln 22, 24 an die jeweiligen Bearbeitungen der Bearbeitungsstationen 14, 16 angepaßt sind.

Es ist noch eine zusätzliche Bearbeitungsstation 26 vorgesehen, die dem Be- und Entladen von Werkstücken 12 dient. Hierzu ist eine schlittenartig verfahrbare Vorrichtung 28 mit einem Greifer 30 vorgesehen. Auf der Bearbeitungsstation 26 werden die Werkstücke 12 in Werkstückträger 32 eingespannt und gegebenenfalls ausgerichtet, nachdem ihre Position im Werkstückträger 32 vermessen wurde.

Die Werkstückträger 32 weisen mindestens einen Abschnitt 34 zum Spannen der Spannstellen 35 der Werkstücke 12 auf. Die Spannstellen 35 sind da am Werkstück 12 vorgesehen, wo es für die Bearbeitung zweckmäßig ist. Im vorliegenden Ausführungsbeispiel ist es an einem Ende der Werkstücke 12. Es ist aber auch denkbar, daß die Werkstückträger 12 in der Mitte an einem Außendurchmesser oder an einem Innendurchmesser gespannt werden. Die Abschnitte 34 zum Spannen der Werkstücke 12 sind an und für sich bekannt. Sie können beispielsweise dem Abschnitt einer Spannzange entsprechen. Auch können sie einem Backenfutter, Spanndorn oder sonst irgendeiner Vorrichtung zum Spannen eines Werkstücks 12 entsprechen.

Weiterhin weisen die Werkstückträger 12 mindestens einen Abschnitt 36 zum Eingriff mit den Antriebsspindeln 22, 24 auf, an dem mindestens eine Spannfläche 38 ausgebildet ist, die mindestens einer Spannfläche 40 der Antriebsspindeln 22, 24 angepaßt ist. Der mindestens eine Abschnitt 36 zum Eingriff mit den Antriebsspindeln 22, 24 entspricht im wesentlichen dem Abschnitt von an und für sich bekannten Vorrichtungen zum Spannen von Werkzeugen. Im vorliegenden Ausführungsbeispiel weist der mindestens eine Abschnitt 36 zum Eingriff mit den Antriebsspindeln 22, 24 eine konische Spannfläche 38 auf. Diese Spannfläche 38 ist so ausgebildet, wie es beispielsweise von Werkzeugkegeln oder Morsekegeln bekannt ist. Es sind auch andere Formen denkbar als nur kegelförmige. Beispielsweise könnte der Abschnitt 38 auch eine Zapfenform zur Festlegung der radialen Position mit einer Ringfläche zum Festlegen der axialen Position der Werkstückträger 32 in den Antriebsspindeln 22, 24 haben.

Die Spannfläche 38 des Werkstückträgers 32 ist sehr genau gefertigt, womit eine präzise Einspannung der Werkstückträger 34 in den Antriebsspindeln 22, 24 möglich ist. Der Durchmesser der konischen Spannfläche 38 hat seinen größten Durchmesser an der Seite, an der sich der Abschnitt 34 zum Spannen der Werkstücke 12 befindet, und nimmt vom Abschnitt 34 zum Spannen der Werkstücke 12 ab. Am Ende der konischen Spannfläche 38 schließt sich ein erster zylindrischer Abschnitt 42 an, an den sich ein zweiter zylindrischer Abschnitt 44 mit einem größeren Durchmesser anschließt. In den Antriebsspindeln 22, 24 sind angedeutete Einrichtungen 46 vorgesehen, die die Abschnitte 42, 44 umgreifen und die Werkstückträger 32 in die Antriebsspindeln 22, 24 ziehen und somit spannen.

Die Werkstückträger 32 mit den Werkstücken 12 sind über ein Transfersystem 48 zu den Antriebsspindeln 22, 24 der Bearbeitungsstationen 14, 16, 26 transportierbar. Dadurch ist es möglich, daß die Werkstückträger 32 mit den Werkstücken 12 vorteilhafterweise wahlweise zu den Bearbeitungsstationen 14, 16, 26 transportierbar sind. Beispielsweise kann ein Werkstückträger 32 mit einem Werkstück 12 zuerst an eine nicht dargestellte, der Bearbeitungsstation 16 nachfolgenden Bearbeitungsstation transportiert werden, dann an die Bearbeitungsstation 14, danach an die Bearbeitungsstation 16 und schließlich an die Bearbeitungsstation 26. Auch die Bearbeitungsstationen 14, 16, 26 können wahlweise kombinierbar sein. Besonders vorteilhaft ist es, die Bearbeitungsstationen 14, 16, 26 linear anzuordnen. Dadurch kann das Transfersystem 48 als eine Linearachse ausgebildet sein. Vorteilhafterweise hat das Transfersystem 48 einen Doppelgreifer 50, wodurch ein schneller Werkstückträgerwechsel an den Bearbeitungsstationen 14, 16 möglich ist.

Für die Bearbeitungen an den Bearbeitungsstationen 14, 16 wird das Werkstück 12 an der Bearbeitungsstation 26 in den Werkstückträger 32 eingespannt. Hierbei kann die Position des Werkstücks 12 exakt bestimmt und eingestellt werden. Hierzu können die Abschnitte 34 zum Spannen der Werkstücke 12 und die Abschnitte 36 zum Eingriff mit den Antriebsspindeln 22, 24 gegeneinander verschiebbar sein. Anschließend wird der Werkstückträger 32 mit dem Werkstück 12 von dem auf der Linearachse des Transfersystems 48 montierten Doppelgreifer 50 zur Bearbeitungsstation 14 gebracht. Hier wird er in der ortsfesten Antriebsspindel 22 zur Bearbeitung aufgenommen. Währenddessen transportiert der Doppelgreifer 50 andere Werkstückträger 32 zwischen den einzelnen Bearbeitungsstationen 14, 16, 26. Die letzte Bearbeitungsstation 16, bei der zum Beispiel bei Einspritzdüsen die wichtigen Flächen Sitz und Führung durch Innenschleifen fertig bearbeitet werden, weist die beiden indexierbaren Antriebsspindeln 24 auf. Anschließend werden an der Bearbeitungsstation 26 die Werkstücke 12 aus den Werkstückträgern 32 ausgespannt und neue Werkstücke 12 eingespannt.

Beim Bearbeiten von Werkstücken 12 mit dem beschriebenen Bearbeitungssystem 10 ist es möglich, daß die Werkstücke 12 für die Bearbeitung in den mindestens zwei Bearbeitungsstationen 14, 16 in den Werkstückträgern 32 eingespannt bleiben. Dadurch sind Bearbeitungen von höchster Präzision realisierbar, die beispielsweise bei der Schleifbearbeitung von Teilen der Benzin- oder Dieseleinspritztechnik Toleranzen im µ-Bereich oder darunter ermöglichen. Die Werkstücke 12 haben üblicherweise etwas zu große Form- und Lagetoleranzen, wodurch die Wiederholgenauigkeit beschränkt ist. Die mindestens eine Spannfläche 38 des mindestens einen Abschnitts 36 des Werkstückträgers 32 zum Eingriff mit den Antriebsspindeln 22, 24 hat vorteilhafterweise Form- und Lagetoleranzen, die präziser bzw. geringer als die der Spannstellen 35 der Werkstücke 12 sind. Die Spannflächen 40 der Antriebsspindeln 22, 24 haben ebenfalls Form- und Lagetoleranzen, die präziser bzw. geringer als die der Spannstellen 35 der Werkstücke 12 sind. Insofern sind diese Spannflächen 38, 40 einander angepaßt. Dadurch sind die für Präzisionsbearbeitungen der höchsten Güte erforderlichen Wiederholgenauigkeiten beim Einspannen in die Antriebsspindeln 22, 24 besonders gut erzielbar. Die Werkstückträger 32 sind also Adapter zur Reduzierung der Form- und Lagetoleranzen der Spannstellen 35 der Werkstücke 12. Durch die Einspannung der Werkstücke 12 in die Werkstückträger 32 fallen die in der Regel relativ großen Form- und Lagetoleranzen der Werkstücke 12 somit nicht mehr ins Gewicht. Die mit dem Bearbeitungssystem 10 hergestellten Werkstückträger 12 genügen dadurch allerhöchsten Ansprüchen.

Durch die Verwendung der Werkstückträger 32 ist es erst möglich, daß die Antriebsspindeln 22, 24 ortsfest bei den Bearbeitungsstationen 14, 16 verbleiben, wodurch ein einfacherer und niedriger Aufbau möglich wird. Ortsfest bedeutet in diesem Zusammenhang, daß die Antriebsspindeln 22, 24 im Betrieb fest auf den Bearbeitungsstationen 14, 16 montiert sind. Natürlich können sie ansonsten demontiert und wieder montiert werden. Dies ermöglicht ein Bearbeitungssystem 10 mit einer hohen Steifigkeit und einer guten Temperaturstabilität, wodurch es nur zu einer minimalen Verformung des Bearbeitungssystems 10 bei Temperatureinflüssen kommt.

## Patentansprüche

1. Bearbeitungssystem (10) zum Bearbeiten von Werkstücken (12), insbesondere zum Schleifen von Werkstücken (12), mit mindestens zwei Bearbeitungsstationen (14, 16, 26), auf denen wenigstens teilweise mindestens ein Schlitten (18) für Werkzeuge (20) zur Bearbeitung der Werkstücke (12) verfahrbar angeordnet ist, und mit Antriebsspindeln (22, 24) für die Werkstücke (12), **dadurch gekennzeichnet, daß** Werkstückträger (32) vorgesehen sind, die mindestens einen Abschnitt (34) zum Spannen der Werkstücke (12) und die mindestens einen Abschnitt (36) zum Eingriff mit den Antriebsspindeln (22, 24) aufweisen, an dem mindestens eine Spannfläche (38) ausgebildet ist, die mindestens einer Spannfläche (40) der Antriebsspindeln (22, 24) angepaßt ist, und daß die die Werkstücke (12) haltenden Werkstückträger (32) zwischen mindestens zwei Bearbeitungsstationen (14, 16, 26) mit zugehörigen ortsfesten Arbeitsspindeln (22, 24), wobei mindestens eine Arbeitsspindel (22, 24) gleit- oder wälzgelagert und mindestens eine Arbeitsspindel (22, 24) hydro- oder aerostatisch gelagert ist, transportiert werden.

2. Bearbeitungssystem (10) nach Anspruch 1, **dadurch gekennzeichnet, daß** die mindestens eine Spannfläche (38) des mindestens einen Abschnitts (36) zum Eingriff mit den Antriebsspindeln (22, 24) und die Spannfläche (40) der Antriebsspindeln (22, 24) Form- und Lagetoleranzen aufweisen, die geringer als die Form- und Lagetoleranzen der Spannstellen (35) der Werkstücke (12) sind.

3. Bearbeitungssystem (10) nach Anspruch 1 oder 2, **dadurch gekennzeichnet, daß** der mindestens eine Abschnitt (38) zum Eingriff mit den Antriebsspindeln (22, 24) im wesentlichen dem Abschnitt einer Spannzange, eines Backenfutters, eines Spanndorns oder dergleichen entspricht.

4. Bearbeitungssystem (10) nach einem der Ansprüche 1 bis 3, **dadurch gekennzeichnet, daß** die Bearbeitungsstationen (14, 16, 26) wahlweise kombinierbar sind.

5. Bearbeitungssystem (10) nach einem der Ansprüche 1 bis 4, **dadurch gekennzeichnet, daß** die Werkstückträger (32) über ein Transfersystem (48) zu den Bearbeitungsstationen (14, 16, 26) transportierbar sind.

6. Bearbeitungssystem (10) nach einem der Ansprüche 1 bis 5, **dadurch gekennzeichnet, daß** die Werkstückträger (32) wahlweise zu den Bearbeitungsstationen (14, 16, 26) transportierbar sind.

7. Bearbeitungssystem (10) nach einem der Ansprüche 1 bis 6, **dadurch gekennzeichnet, daß** die Bearbeitungsstationen (14, 16, 26) linear angeordnet sind.

8. Bearbeitungssystem (10) nach einem der Ansprüche 5 bis 7, **dadurch gekennzeichnet, daß** das Transfersystem (48) eine Linearachse mit einem Doppelgreifer (50) ist.

9. Bearbeitungssystem (10) nach einem der Ansprüche 1 bis 8, **dadurch gekennzeichnet, daß** mindestens eine Bearbeitungsstation (16) mit zwei indexierbaren Antriebsspindeln (24) vorgesehen ist.

## Claims

1. Machining system (10) for machining workpieces (12), in particular for grinding workpieces (12), having at least two machining stations (14, 16, 26), on which at least one slide (18) for tools (20) for machining the workpieces (12) is at least partly arranged in a traversable manner, and having drive spindles (22, 24) for the workpieces (12), **characterized in that** work carriers (32) are provided which have at least one section (34) for clamping the workpieces (12) and at least one section (36) for engaging with the drive spindles (22, 24), on which section (36) at least one clamping surface (38) is formed which is adapted to at least one clamping surface (40) of the drive spindles (22, 24), and **in that** the work carriers (32) holding the workpieces (12) are transported between at least two machining stations (14, 16, 26) having associated fixed work spindles (22, 24), at least one work spindle (22, 24) being mounted in plain or rolling bearings and at least one work spindle (22, 24) being mounted hydrostatically or aerostatically.

2. Machining system (10) according to Claim 1, **characterized in that** the at least one clamping surface (38) of the at least one section (36) for engaging with the drive spindles (22, 24) and the clamping surface (40) of the drive spindles (22, 24) have form and positional tolerances which are smaller than the form and positional tolerances of the clamping points (35) of the workpieces (12).

3. Machining system (10) according to Claim 1 or 2, **characterized in that** the at least one section (38) for engaging with the drive spindles (22, 24) corresponds essentially to the section of a collet, a jaw chuck, a mounting arbor or the like.

4. Machining system (10) according to one of Claims 1 to 3, **characterized in that** the machining stations (14, 16, 26) are optionally combinable.

5. Machining system (10) according to one of Claims 1 to 4, **characterized in that** the work carriers (32) can be transported to the machining stations (14, 16, 26) via a transfer system (48).

6. Machining system (10) according to one of Claims 1 to 5, **characterized in that** the work carriers (32) can be optionally transported to the machining stations (14, 16, 26).

7. Machining system (10) according to one of Claims 1 to 6, **characterized in that** the machining stations (14, 16, 26) are arranged linearly.

8. Machining system (10) according to one of Claims 5 to 7, **characterized in that** the transfer system (48) is a linear axis with a double gripper (50).

9. Machining system (10) according to one of Claims 1 to 8, **characterized in that** at least one machining station (16) is provided with two indexable drive spindles (24).

## Revendications

1. Système d'usinage (10) pour l'usinage de pièces (12), notamment pour le polissage de pièces (12), comprenant au moins deux stations d'usinage (14, 16, 26) sur lesquelles est disposé au moins partiellement et de façon mobile au moins un chariot (18) pour les outils (20) destinés à l'usinage des pièces (12), et comprenant des broches d'entraînement (22, 24) pour les pièces (12),
**caractérisé en ce que**
des supports de pièce (32) présentent au moins un segment (34) pour serrer les pièces (12) et au moins un segment (36) qui s'engage avec les broches d'entraînement (22, 24) et qui comporte au moins une surface de serrage (38) adaptée à au moins une surface de serrage (40) des broches d'entraînement (22, 24), et les supports de pièce (32) maintenant les pièces (12) sont transportés entre au moins deux stations d'usinage (14, 16, 26) ayant des broches d'entraînement (22, 24) fixes associées, au moins une broche d'entraînement (22, 24) étant logée de façon à coulisser ou à tourner et au moins une broche d'entraînement (22, 24) étant logée de façon hydrostatique ou aérostatique.

2. Système d'usinage (10) selon la revendication 1,
**caractérisé en ce que**
l'au moins une surface de serrage (38) de l'au moins un segment (36) s'engageant avec les broches d'entraînement (22, 24) et la surface de serrage (40) des broches d'entraînement (22, 24) présentent des tolérances de forme et de position inférieures aux tolérances de forme et de position des points de serrage (35) des pièces (12).

3. Système d'usinage (10) selon la revendication 1 ou 2,
**caractérisé en ce que**
l'au moins un segment (38) s'engageant avec les broches d'entraînement (22, 24) correspond pour l'essentiel à un segment de pince de serrage, d'un mandrin à mors, d'un mandrin porte-pièce ou analogue.

4. Système d'usinage (10) selon l'une des revendications 1 à 3,
**caractérisé en ce que**
les stations d'usinage (14, 16, 26) peuvent être combinées au choix.

5. Système d'usinage (10) selon l'une des revendications 1 à 4,
**caractérisé en ce que**
les supports de pièce (32) peuvent être transportés sur un système de transfert (48) vers les stations d'usinage (14, 16, 26).

6. Système d'usinage (10) selon l'une des revendications 1 à 5,
**caractérisé en ce que**
les supports de pièce (32) peuvent être transportés au choix vers les stations d'usinage (14, 16, 26).

7. Système d'usinage (10) selon l'une des revendications 1 à 6,
**caractérisé en ce que**
les stations d'usinage (14, 16, 26) sont disposées en ligne.

8. Système d'usinage (10) selon l'une des revendications 5 à 7,
**caractérisé en ce que**
le système de transfert (48) est un axe linéaire avec une pince double (50).

9. Système d'usinage (10) selon l'une des revendications 1 à 8,
**caractérisé en ce qu'**
au moins une station d'usinage (16) comporte deux broches d'entraînement (24) pouvant être indexées.
